# EUROPEAN PATENT APPLICATION

(11) **EP 4 064 497 A1**
(43) Date of publication of application: **28.09.2022**
(21) Application number: 21165007.2
(22) Date of filing: 25.03.2021
(51) Int. Cl.: H02J 3/18, B60L 53/00, B60L 53/65, H02J 3/32, H02J 7/00, H02J 7/02

(54) **METHOD AND APPARATUS FOR CONTROLLING CHARGING OF ELECTRIC VEHICLES**

(71) Applicant: Vestel Elektronik Sanayi ve Ticaret A.S., 45030 Manisa (TR)
(72) Inventor: ÖZEN, Erol, 45030 Manisa (TR)
(74) Representative: Flint, Adam

(57) **Abstract**

A method and apparatus for controlling charging of electric vehicles (100) from a mains electricity power grid (12) at a charging station (10) are disclosed. The charging station (10) has a plurality of charging sockets (18) to which electric vehicles (100) connect in order to receive electrical energy. The power factor of the grid (12) is measured. The charging of electric vehicles (100) from the grid (12) at the charging station (10) is controlled based on the power factor of the grid (12).

## Description

### Technical Field

The present disclosure relates to a method and apparatus for controlling charging of electric vehicles.

### Background

When electric vehicles are being charged from a mains electricity power grid at a charging station, the power demand from the grid may be so high as to overload the grid. This can lead to drops in the power that is available from the grid, at the charging station and to other "sinks" that need power from the grid, such as domestic and commercial buildings, street lighting, etc. There is therefore a need to control the charging of electric vehicles so as not to overload the grid.

### Summary

According to a first aspect disclosed herein, there is provided a method of charging a plurality of electric vehicles from a mains electricity power grid at a charging station, the charging station having a plurality of charging sockets to which electric vehicles connect in order to receive electrical energy, the method comprising:
measuring the power factor of the grid; and
controlling the charging of electric vehicles from the grid at the charging station based on the power factor of the grid.

In an example, the method comprises:
continuously measuring the power factor of the grid or repeatedly measuring the power factor of the grid at intervals of time; and
controlling the charging of electric vehicles to adjust the charging of electric vehicles if the measured power factor changes over time.

In an example, controlling the charging of electric vehicles comprises charging all electric vehicles that are connected to charging ports at the charging station if the power factor of the grid is above a threshold value.

In an example, controlling the charging of electric vehicles comprises charging electric vehicles at the charging station according to a priority allocated to the electric vehicles such that if the power factor of the grid is low, only electric vehicles having a high priority are charged at the charging station.

In an example, the method comprises:
obtaining data concerning the type of vehicle from electric vehicles that are connected to charging ports at the charging station, and allocating a priority to an electric vehicle based on the type of that electric vehicle.

In an example, the method comprises:
obtaining a measure of the current state of charge of electric vehicles that are connected to charging ports at the charging station, and allocating a high priority to an electric vehicle if the current state of charge of the electric vehicle is below a threshold.

According to a second aspect disclosed herein, there is provided apparatus for controlling charging a plurality of electric vehicles from a mains electricity power grid at a charging station, the charging station having a plurality of charging sockets to which electric vehicles connect in use in order to receive electrical energy, the apparatus comprising:
a power factor measurement device for measuring the power factor of the grid; and
a charger management device for controlling the charging of electric vehicles from the grid at the charging station based on the power factor of the grid.

In an example:
the power factor measurement device is arranged to continuously measure the power factor of the grid or repeatedly measure the power factor of the grid at intervals of time; and
the charger management device is arranged to control the charging of electric vehicles to adjust the charging of electric vehicles if the measured power factor changes over time.

In an example, the charger management device is arranged to control the charging of electric vehicles to charge all electric vehicles that are connected to charging ports at the charging station if the power factor of the grid is above a threshold value.

In an example, the charger management device is arranged to control the charging of electric vehicles to charge electric vehicles at the charging station according to a priority allocated to the electric vehicles such that if the power factor of the grid is low, only electric vehicles having a high priority are charged at the charging station.

In an example, the charger management device is arranged to obtain data concerning the type of vehicle from electric vehicles that are connected to charging ports at the charging station, and to allocate a priority to an electric vehicle based on the type of that electric vehicle.

In an example, the charger management device is arranged to obtain a measure the current state of charge of electric vehicles that are connected to charging ports at the charging station, and to allocate a high priority to an electric vehicle if the current state of charge of the electric vehicle is below a threshold.

### Brief Description of the Drawings

To assist understanding of the present disclosure and to show how embodiments may be put into effect, reference is made by way of example to the accompanying drawings in which:
Figure 1 shows a vector power triangle to illustrate real power, reactive power and apparent power;
Figure 2 shows schematically an example of a charging station and a number of electric vehicles being charged;
Figure 3 shows schematically a flow diagram of an example of prioritising charging of electric vehicles; and
Figure 4 shows schematically a block diagram of an example of a combined power factor measurement and charger management unit of a charging station.

### Detailed Description

Electric vehicles are gaining in importance. There are two main types of electric vehicle, namely fully electric (i.e. 100% electrical powered) and hybrid (which use a combination of gasoline (petrol) or diesel and electrical power). Batteries store charge in order to drive electric motors to propel the vehicle. Fully electric and some hybrid vehicles require charging of their batteries from time to time. Charging stations may be provided at which a number of electric vehicles may be charged simultaneously using electrical energy from a mains electricity power grid. Charging is typically controlled by processors running algorithms in the vehicle and the charging station which communicate with each other.

As noted, when a number of electric vehicles are being charged from a mains electricity power grid at a charging station, the power demand from the grid may be so high as to overload the grid. This can lead to drops in the power that is available from the grid, at the charging station and to other sinks that need power from the grid, such as domestic and commercial buildings, street lighting, etc., and can even lead to a complete collapse of the grid, at least locally, causing "black outs" or the like. This can be a particular problem at certain times of the day, such as "rush hour" in mornings and evenings when a lot of vehicles are being used to transport people between home and workplaces, schools, etc., during a holiday season, etc.

Examples of the present disclosure control the charging of (one or more batteries of) electric vehicles so as not to overload the grid. In one aspect, this is achieved by controlling the charging of electric vehicles from the grid at a charging station based on the power factor of the grid. In a particular example, electric vehicles may be charged at the charging station according to a priority allocated to the electric vehicles.

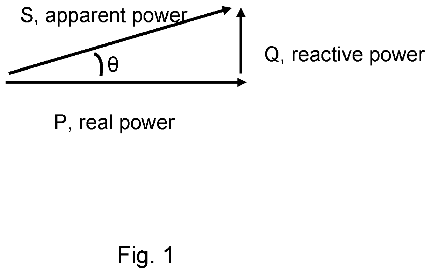

In general, AC power flow has two components, namely 1) real power (also called active power) (P), expressed in watts (W), and 2) reactive power (Q), usually expressed in reactive volt-amperes (VAR). Together, the real power and the reactive power form the complex power (S), which is expressed in volt-amperes (VA). The magnitude of the complex power is the apparent power (|S|), which is also expressed in volt-amperes (VA). This is illustrated schematically in Figure 1 which shows a vector power triangle to illustrate real power P, reactive power Q and apparent power S.

The "power factor" is defined as the ratio of real power P to apparent power S. That is, the power factor describes the amount of real power transmitted along a transmission line relative to the total apparent power flowing in the line. Real power is the instantaneous product of voltage and current and represents the capacity of the electricity for performing work. Apparent power is the product of RMS current and voltage. The power factor is a dimensionless number in the range -1 to +1. A power factor of less than one indicates that the voltage and current are not in phase, which reduces the average product of the voltage and current. This occurs when reactive loads are present, such as loads that have capacitors or inductors or other non-linear components, because extra energy, in addition to any energy consumed in the load, is temporarily stored in electric or magnetic fields in the load during a cycle and then returned to the power grid a fraction of the cycle later. A negative power factor occurs when the device (which is normally the load) generates power which flows back towards the source.

In a mains electricity power grid, reactive loads cause a continuous increase and decrease of non-productive power. If the mains electricity power grid has a low power factor, a greater amount of current is used to transfer a given quantity of real power than when the mains electricity power grid has a high power factor. Therefore, a lower power factor leads to increased losses due to resistive heating in power lines, etc., as well as requiring the use of higher-rated conductors and transformers, etc.

It is in general therefore desirable to keep the power factor of a mains electricity power grid high, that is, as close to 1 as possible.

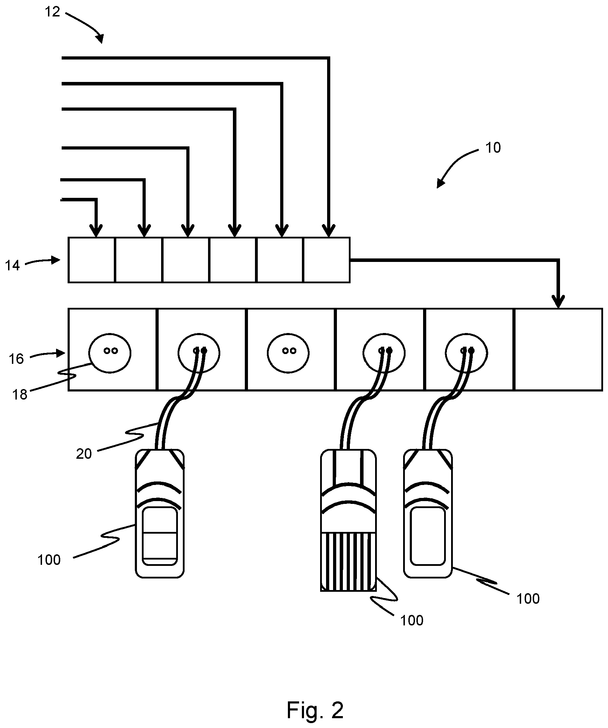

Referring now to Figure 2, this shows schematically an example of a charging station 10 and a number of electric vehicles 100 being charged. Electrical energy is supplied from a mains electricity power grid, indicated schematically at 12. The electrical energy is supplied via a power factor measurement unit 14 to charger management units 16 which each have a charging socket 18 to which the vehicles 100 respectively connect using detachable charging cables 20. In this example, the power factor measurement unit 14 and the charger management units 16 are indicated as separate devices for measuring the power factor and controlling the charging of electric vehicles 100 respectively. In other examples, the functionality of the power factor measurement unit 14 and the charger management units 16 may be provided by a single, combined unit.

The power factor measurement unit 14 measures the real or active power P and the reactive power Q power of the mains electricity power grid 12. The power factor of the mains electricity power grid 12 is calculated as the ratio of real power P to apparent power S, where the apparent power S is the vector sum of the real power P and the reactive power Q with a phase angle θ (see Figure 1). The power factor measurement unit 14 may calculate this power factor or it may be calculated by another unit. For example, national grid operators commonly monitor the power factor of a grid in order to ensure that it stays as close to 1 as possible, for the sake of efficient operation.

The calculated power factor value is sent to the charger management units 16. The charger management units 16 control the charging of electric vehicles 100 based on at least the received power factor of the grid 12. In general, the charging of electric vehicles 100 is controlled in order to keep the power factor high (i.e. close to 1). This may be achieved by for example limiting the charging of some electric vehicles 100 at any particular time. This is contrasted with for example allowing each electric vehicle 100 to draw power "at will" based only on considerations relevant for each electric vehicle independently (for example, in accordance only with the state of charge of the battery or batteries of that electric vehicle 100, the acceptable rate of delivery of electrical energy for that particular vehicle 100 based on its battery technology, etc.).

This process of measuring the real power P and the reactive power Q power of the mains electricity power grid 12 and calculating (measuring) the power factor of the grid 12, and sending that power factor to the charger management units 16, may be carried out continuously or repeatedly at intervals of time (for example, once a minute, once every 5 minutes, once every 10 minutes, etc.). This enables the power factor that is used by the charger management units 16 to reflect closely the current instantaneous power factor of the grid 12, which enables better control of the power factor of the grid 12 by adjusting the charging of the electric vehicles 100 as necessary in more or less real time.

Various criteria and factors may be involved in controlling the charging of specific electric vehicles 100 in order to keep the power factor high.

A first criterion is that if the power factor of the grid 12 is already high, then all electric vehicles 100 that are connected to charging sockets 18 of the charging station 10 can be charged. Accordingly, if the power factor of the grid 12 is above some defined threshold, then the charger management units 16 can cause each connected electric vehicle 100 to be charged. The threshold for the power factor for this may be fixed or may be changed from time to time, according to for example local conditions, expected instantaneous demand on the power grid as a whole, etc. Further, what is regarded as an acceptable power factor for a grid may be different in different countries and different regions within a country. For example, a higher threshold, such as above 0.9, might be expected in some highly developed countries, whereas a lower threshold, such as above 0.75, might be tolerated in less developed countries.

Another factor that may be used is to allocate a priority to the different electric vehicles 100. If for example the power factor falls below a threshold, then the charger management units 16 can cause only higher priority vehicles 100 to be charged, whilst other, lower priority vehicles 100 will not be charged (at least for the period of time whilst the power factor remains below that threshold). There may be several thresholds or ranges for the power factor and a corresponding allocation of different priorities to the vehicles 100. In this case, if the power factor is below a lowest threshold priority, only the highest priority vehicles 100 are charged; if the power factor is above a lowest threshold priority but below the next threshold, then vehicles having the highest priority and the next highest priority will be charged, but other, lower priority vehicles are not charged; etc.

The priority that is allocated to an electric vehicle 100 may be based on one or more factors. Some examples will now be given.

A first factor is the type of vehicle 100. When a vehicle 100 connects to the charging station 100, for example by connection of a charging cable 20 to a charging socket 18, the corresponding charger management unit 16 may obtain data from the vehicle 100 that indicates the type of vehicle 100. This data may be obtained via data lines associated with the charging cable 20, wirelessly from the electric vehicle 100, via software (an "app") which the driver of the vehicle 100 has installed on a personal computing device and that is registered with the operator of the charging station 100, etc. The data may indicate that the vehicle 100 is to be regarded as a high priority. The data may be encrypted to prevent "spoofing" of the type of vehicle 100 and therefore its priority.

For example, emergency vehicles, such as ambulances, fire engines and the like, police and other state or government vehicles, etc., may be regarded as a high priority. The vehicle 100 may indicate its "type" (i.e. that is one of a number of specific categories of vehicle) and the charger management unit 16 allocates a priority to the vehicle 100 based on that indicated type, or equivalently the vehicle 100 may indicate a priority directly and the charger management unit 16 allocates a charging priority to the vehicle 100 accordingly. If the vehicle 100 is not a high priority vehicle, such as an emergency vehicle, etc., or does not indicate its type, then the vehicle may be given a low priority.

As another example, electric vehicles that are fully electric may be given a higher priority for charging than hybrid vehicles, given that hybrid vehicles already have another power source in the form of a combustion engine.

As another example, electric vehicles that consume electrical energy at a low rate may be given a higher priority than electric vehicles that consume electrical energy at a high rate. This encourages uses of low power electric vehicles, which may be particularly useful in areas that have a high population density and/or relatively poor electric grid infrastructure. For example, in order of decreasing priority, a different priority may be allocated to two wheel electric vehicles, four wheel electric vehicles that have a low power rating, four wheel electric vehicles that have a high power rating, etc. As another example, particularly for regions that have a rugged terrain, electric vehicles that are four-wheel drive and or more suited for off-road driving, such as "sports utility vehicles" and the like, may have a higher priority. As another example, electric lorries or trucks may have a higher priority as these may be deemed more important in order to ensure that food and other essential supplies are delivered.

Another factor is the current state of charge of the battery or batteries of the electric vehicle 100. When a vehicle 100 connects to the charging station 100, for example by connection of a charging cable 20 to a charging socket 18, the corresponding charger management unit 16 may obtain data from the vehicle 100 that indicates the current state of charge of the battery or batteries of the electric vehicle 100. This data may for example be obtained via data lines associated with the charging cable 20 or wirelessly from the electric vehicle 100. If the current state of charge is low, then the vehicle 100 is treated as a high priority for charging. There may be different levels of priority corresponding to different levels of current state of charge.

These factors may be combined in various combinations so as to allocate priorities to vehicles for charging. Numerous combinations are possible, and may be set locally by the operator of the charging station 10 or by the operator of the mains electricity power grid 12, or by both working cooperatively. As one example only, a priority table, which may be used as a look-up table, may be in the following form, where a smaller number priority is a higher priority):

**Table 1**

| Priority Level | Priority Rank | Factors |
|---|---|---|
| 1 | Highest | Emergency and state vehicles (ambulances, fire engines, police vehicles, etc.) |
| 2 | High | Full EVs which have less than 10% current state of charge and less than 20% charge demand (i.e. demand an additional charge amount that is 20% of the battery capacity) |
| 3 | Medium | Full EVs which have less than 50% current state of charge and less than 20% charge demand |
| 4 | Low | Hybrid EVs which have less than 50% current state of charge and less than 20% charge demand |

As another example only, a priority table, which may be used as a look-up table, may be in the following form, where again a smaller number priority is a higher priority):

**Table 2**

| Priority Level | Priority Rank | Factors |
|---|---|---|
| 1 | Highest | Emergency and state vehicles (ambulances, fire engines, police vehicles, etc.) |
| 2 | | Two wheel full EVs which have less than 10% current state of charge and less than 20% charge demand |
| 3 | | Four wheel full EVs which have less than 10% current state of charge and less than 20% charge demand |
| 4 | | Two wheel full EVs which have less than 50% current state of charge and less than 20% charge demand |
| 5 | | Four wheel full EVs which have less than 50% current state of charge and less than 20% charge demand |
| 6 | Lowest | Hybrid EVs which have less than 50% current state of charge and less than 20% charge demand |

The factors that determine the priorities may be adjusted, based on for example current conditions of the grid 12, numbers and types of vehicles 100 typically using the charging station 10 at a particular time or at the current time, user preferences (which may be collated via questionnaires, social media), etc. The number of priorities in the tables above is four and six respectively, but this may also be adjusted, and the number of priorities may be different in different countries or regions according to local requirements.

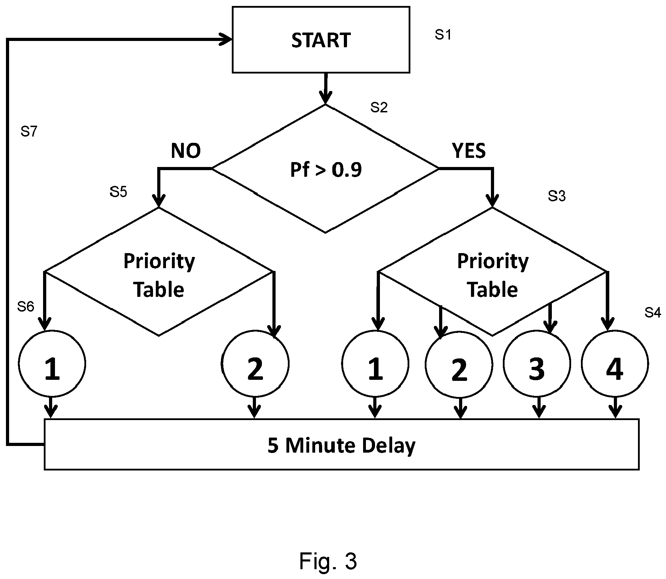

Referring to Figure 3, this shows schematically a flow diagram of an example of prioritising the charging of electric vehicles 100 at a charging station 10. The process may start at S1, for example when an electric vehicle 100 connects to a charging socket 18 of the charging station 10. Data concerning the type of vehicle and the state of charge of any connected electric vehicles 100 is obtained, and priorities are allocated to the electric vehicles 100 as discussed above. The power factor pf of the grid 12 supplying the charging station 10. If at S2 the power factor is above some highest threshold, such as 0.9 in this example, then a priority table is consulted at S3. The priority table contains information concerning the priority of each electric vehicle 100 and the particular charging socket 18 to which the electric vehicle 100 is connected. In this case, the charger management units 16 control the charging of electric vehicles 100 such that all electric vehicles 100, that is all electric vehicles 100 having a priority of 1, 2, 3 or 4, are charged at S4. On the other hand, if at S2 the power factor is below the highest threshold, then a priority table is consulted at S5. In this case, the charger management units 16 control the charging of electric vehicles 100 such that only the highest priority electric vehicles 100 are charged at S6 (in this example, only electric vehicles 100 having a priority of 1 or 2). In this particular example, flow returns S7 to the start S1 at regular intervals, in this example every 5 minutes, and the cycle repeats.

As an option, if after a first iteration (after 5 minutes here) the power factor is still below the threshold, then the charger management units 16 may control the charging of electric vehicles 100 such that only electric vehicles 100 having the highest priority of 1 are charged. Then, when the power factor rises above the threshold, the charger management units 16 may control the charging of electric vehicles 100 such that again electric vehicles 100 having the two highest priorities of 1 and 2 are charged. Following that, if on the next iteration the power factor remains above the threshold, then the charger management units 16 may control the charging of electric vehicles 100 such that all electric vehicles 100 having a priority of 1, 2, 3 or 4 are charged. This can help to minimise the time that vehicle owners have to wait before their vehicle is charged, whilst prioritising important vehicles and yet keeping the power factor of the grid 12 high.

As noted, there may be a number of thresholds for the power factor of the grid 12, and charging of electric vehicles 100 may be prioritised in bands correspondingly. Further, the system may be arranged such that if the power factor of the grid 12 falls below some lowest threshold, such as for example 0.1 or similar, then no charging of any electric vehicle 100 is performed until the power factor rises above that lowest threshold again.

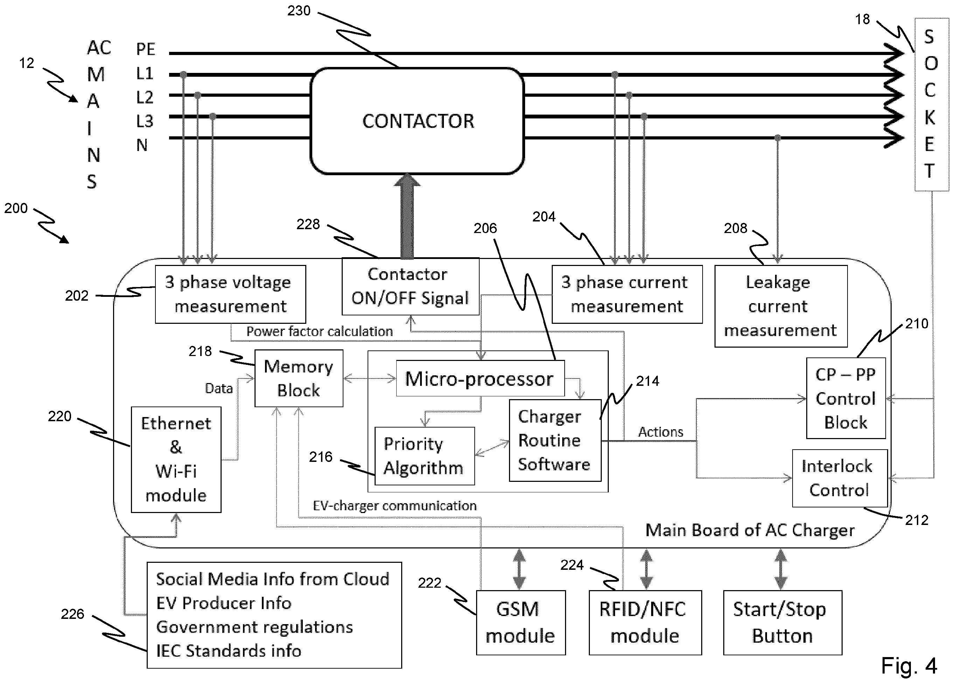

As mentioned, the power factor measurement unit 14 for measuring the power factor of the grid 12 and the charger management units 16 may be provided separately or the functionality of the power factor measurement unit 14 and the charger management units 16 may be provided by a single, combined unit. Referring to Figure 4, this shows schematically a block diagram of an example of a combined power factor measurement and charger management unit 200 of a charging station 10. The principal components of the combined unit 200 will be described. It will be understood that similar or corresponding components will be provided respectively in the power factor measurement units 14 and charger management units 16 of the previous example where these are provided separately.

The unit 200 has a voltage measurement device 202 and a current measurement device 204 which are connected in use to the mains grid power supply 12 to measure the mains voltage and current respectively. The mains grid power supply 12 provides electrical energy to the sockets 18 of the charging station 100. The measurements of the mains voltage and current are provided to a processor 206 which calculates the power factor of the grid 12. A mains leakage current device 208 may measure mains leakage from the mains grid power supply 12.

The sockets 18 of the charging station 100 are connected to a CP-PP control 210 and an interlock control 212. The CP-PP control 210 may be used to provide capability and performance indicators for the process as a whole. The interlock control 212 determines whether a charging cable 20 is connected to a particular charging socket 18 and provide a corresponding signal to charger routine software 214 which is being run by the processor 206.

The processor 206 also runs software to implement a priority algorithm 216 which allocates priorities to the electric vehicles 100 and prioritises the charging of electric vehicles 100 in accordance with any of the examples discussed above. As discussed above in more detail above, in examples electric vehicles 100 may be charged or not at a particular time, under control of the processor 206 running the priority algorithm 216, depending particularly on the (instantaneous) power factor of the grid 12 and also the priorities that are allocated to the vehicles 100.

To allocate priorities to the electric vehicles 100, the unit 200 has a memory block 218 which receives, from the electric vehicles 100 that are connected to charging sockets 18 at a particular time, data concerning those electric vehicles 100 and stores that data (at least temporarily for use in the necessary processing). The data may be received via wired and/or wireless connections, indicated schematically by an Ethernet and WiFi module 220, a GSM (Group Special Mobile) or other cellular (e.g. 3G, 4G, etc.) module 222 and an RFID/NFC (radio frequency identification/ near-field communication) module 224. The data concerning the electric vehicles 100 may include the type of vehicle 100 (e.g. one of a number of specific categories of vehicle, such as emergency vehicles, such as ambulances, fire engines and the like, police and other state or government vehicles, etc.; or fully electric or hybrid; two wheel of four wheel; etc., as discussed further above). The data concerning the electric vehicles 100 may include the current state of charge of the battery or batteries of the electric vehicles 100.

The memory block 218 may also receive other data that is used to allocate priorities to the electric vehicles 100, including for determining the number of priorities to be allocated and the specific categories of vehicles 100 that are to be allocated a respective priority. Such data is indicated schematically at 226 as including social media information, information concerning electric vehicles from manufacturers of the electric vehicles, government regulations, which may for example stipulate how electric vehicle are to be prioritised for charging, IEC or similar Standards information, which again may stipulate how electric vehicle are to be prioritised for charging, etc.

The unit 200 has a signal output device 228 which outputs a signal to contactors 230 which are connected to the mains power supply to each of the charging sockets 18. The signal output device 228 outputs signals to the respective contactors 230 which determine whether the electric vehicle 100 that is connected to the corresponding charging socket 18 is actually charged or not at any particular time, in accordance with the decision of the processor 206 based on the power factor of the grid 12 and the priorities of the electric vehicles 100, as discussed more fully above.

Examples described herein, whether implemented by separate devices or a combined unit, enable electric vehicles to be charged without jeopardising the operation of the mains electricity power grid. The examples can be integrated easily into existing charging stations and do not require high computing ability. The system can be adapted easily according to local requirements in different countries or regions, with simple and quick adaptation of the variables and factors that are used to determine which electric vehicles can be charged at any particular time.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of charging a plurality of electric vehicles from a mains electricity power grid at a charging station, the charging station having a plurality of charging sockets to which electric vehicles connect in order to receive electrical energy, the method comprising:
measuring the power factor of the grid; and
controlling the charging of electric vehicles from the grid at the charging station based on the power factor of the grid.

2. A method according to claim 1, comprising:
continuously measuring the power factor of the grid or repeatedly measuring the power factor of the grid at intervals of time; and
controlling the charging of electric vehicles to adjust the charging of electric vehicles if the measured power factor changes over time.

3. A method according to claim 1 or claim 2, wherein controlling the charging of electric vehicles comprises charging all electric vehicles that are connected to charging ports at the charging station if the power factor of the grid is above a threshold value.

4. A method according to any of claims 1 to 3, wherein controlling the charging of electric vehicles comprises charging electric vehicles at the charging station according to a priority allocated to the electric vehicles such that if the power factor of the grid is low, only electric vehicles having a high priority are charged at the charging station.

5. A method according to claim 4, comprising:
obtaining data concerning the type of vehicle from electric vehicles that are connected to charging ports at the charging station, and allocating a priority to an electric vehicle based on the type of that electric vehicle.

6. A method according to claim 4 or claim 5, comprising:
obtaining a measure of the current state of charge of electric vehicles that are connected to charging ports at the charging station, and allocating a high priority to an electric vehicle if the current state of charge of the electric vehicle is below a threshold.

7. Apparatus for controlling charging a plurality of electric vehicles from a mains electricity power grid at a charging station, the charging station having a plurality of charging sockets to which electric vehicles connect in use in order to receive electrical energy, the apparatus comprising:
a power factor measurement device for measuring the power factor of the grid; and
a charger management device for controlling the charging of electric vehicles from the grid at the charging station based on the power factor of the grid.

8. Apparatus according to claim 7, wherein:
the power factor measurement device is arranged to continuously measure the power factor of the grid or repeatedly measure the power factor of the grid at intervals of time; and
the charger management device is arranged to control the charging of electric vehicles to adjust the charging of electric vehicles if the measured power factor changes over time.

9. Apparatus according to claim 7 or claim 8, wherein the charger management device is arranged to control the charging of electric vehicles to charge all electric vehicles that are connected to charging ports at the charging station if the power factor of the grid is above a threshold value.

10. Apparatus according to any of claims 7 to 9, wherein the charger management device is arranged to control the charging of electric vehicles to charge electric vehicles at the charging station according to a priority allocated to the electric vehicles such that if the power factor of the grid is low, only electric vehicles having a high priority are charged at the charging station.

11. Apparatus according to claim 10, wherein the charger management device is arranged to obtain data concerning the type of vehicle from electric vehicles that are connected to charging ports at the charging station, and to allocate a priority to an electric vehicle based on the type of that electric vehicle.

12. Apparatus according to claim 10 or claim 11, wherein the charger management device is arranged to obtain a measure the current state of charge of electric vehicles that are connected to charging ports at the charging station, and to allocate a high priority to an electric vehicle if the current state of charge of the electric vehicle is below a threshold.
